# EUROPÄISCHE PATENTSCHRIFT

(11) **EP 1 516 337 B1**
(45) Veröffentlichungstag und Bekanntmachung des Hinweises auf die Patenterteilung: **16.08.2006**
(21) Anmeldenummer: 03737938.5
(22) Anmeldetag: 13.06.2003
(51) Int. Cl.: G11B 23/03

(54) **AUFBEWAHRUNGSBEHÄLTER FÜR SCHEIBENFÖRMIGE INFORMATIONSTRÄGER**
STORAGE CONTAINER FOR DISK-SHAPED INFORMATION CARRIERS
CONTENANT DE STOCKAGE POUR SUPPORTS D'INFORMATION EN FORME DE DISQUE

(30) Priorität: 17.06.2002 DE 20209379 U
(43) Veröffentlichungstag der Anmeldung: 23.03.2005
(73) Patentinhaber: Foerster, Fritz, 24558 Henstedt-Ulzburg (DE); Naatz, Joachim, D-24558 Henstedt-Ulzburg (DE)
(72) Erfinder: Foerster, Fritz, 24558 Henstedt-Ulzburg (DE); Naatz, Joachim, D-24558 Henstedt-Ulzburg (DE)
(74) Vertreter: Haug, Dietmar
(86) Internationale Anmeldenummer: PCT/DE2003/001989
(87) Internationale Veröffentlichungsnummer: WO 2003/107344

(56) Entgegenhaltungen:
- DE-A- 19 602 782
- US-A- 5 906 274

## Beschreibung

Die Erfindung betrifft einen Aufbewahrungsbehälter für scheibenförmige Informationsträger, mit einem einen Boden aufweisenden Unterteil, einem schwenkbar mit dem Unterteil verbundenen Deckel, der relativ zu dem Unterteil auf- und zuklappbar ist, und einer einen kurzen Schenkel und einen langen . Schenkel aufweisenden Entriegelungstaste, die durch Daumendruck auf den langen Schenkel von einem Schließzustand, in dem sie den zugeklappten Deckel und einen in den Behälter eingelegtefi Informationsträger durch Klemmeingriff mit dem Deckel und dem Informationsträger am Unterteil festhält, in einen niedergedrückten Zustand, in dem sie außer Eingriff mit dem Deckel und dem Informationsträger ist, bewegbar ist, wobei der kurze Schenkel elastisch biegeverformbar ist und der Boden eine auf der Behälteraußenseite liegende untere Oberfläche hat, die in einer Ebene liegt, die im Schließzustand der Entriegelungstaste unter dem langen Schenkel verläuft. Unter "scheibenförmige Informationsträger" sind hauptsächlich, aber nicht ausschließlich, Compact-Discs wie Audio-CDs, Photo-CDs, CD-ROM, DVDs oder Video-CDs zu verstehen.

Ein solcher Aufbewahrungsbehälter ist aus der EP-A-0 671 743 bekannt. Bei diesem Aufbewahrungsbehälter befindet sich in dem Unterteil ein Einsatz, der eine Aufnahmemulde für die CD aufweist. Die Entriegelungstaste ist an dem Einsatz ange-formt und ist im Schließzustand mit der CD und/oder dem Deckel in einen Klemmeingriff bringbar, um die CD in der Aufnahmemulde des Einsatzes festzuhalten und/oder den Deckel in seiner Schließstellung relativ zu dem Unterteil lösbar zu arretieren. Da der Einsatz leicht lösbar in dem Unterteil angeordnet ist und sich die Entriegelungstaste an dem Einsatz befindet, sind weitere Haltemittel an dem Deckel und/oder dem Unterteil vorhanden, die in der Schließstellung des Deckels eine direkte lösbare Verbindung zwischen dem Deckel und dem Unterteil herstellen, um den Deckel in der Schließstellung sicher an dem Unterteil zu halten.

Auch aus der DE 197 02 667 A1 ist ein Aufbewahrungsbehälter für scheibenförmige Informationsträger bekannt, bei dem ein Unterteil und ein Deckel schwenkbar miteinander verbunden sind und eine Entriegelungstaste vorgesehen ist, die an einem im Unterteil des Behälters liegenden Einsatz angeformt ist, der eine Aufnahmemulde für den scheibenförmigen Informationsträger hat. Auch bei diesem Aufbewahrungsbehälter fixiert die Entriegelungstaste den Deckel in der Schließstellung an dem Einsatz und nicht unmittelbar an dem Unterteil.

Weiterhin bekannt sind die sogenannten dünnen Aufbewahrungsbehälter für CDs, die jeweils nur aus einem Unterteil und einem Deckel bestehen, der schwenkbar mit dem Unterteil verbunden ist, wobei die CD unmittelbar in das Unterteil einlegbar ist. Durch an den Deckel und/oder das Unterteil angeformte Halteelemente wird der Deckel in der Schließstellung an dem Unterteil gehalten. Ein solcher Aufbewahrungsbehälter hat den Nachteil, daß zum Öffnen des Deckels in aller Regel beide Hände benötigt werden, denn, während mit der einen Hand der Deckel aufgeklappt wird, muß mit der anderen Hand das Unterteil gehalten werden. Da die CD in aller Regel am Unterteil lösbar fixiert ist, muß nach dem Aufklappen des Deckels umgegriffen werden, um die CD aus dem Unterteil des Behälters herauszunehmen. Die Handhabung eines solchen Aufnahmebehälters und die Herausnahme der CD aus dem Behälter sind daher etwas beschwerlich und beinhalten ein gewisses Risiko, daß die CD bei der Herausnahme aus dem Behälter übermäßig gebogen wird und herunterfallen kann.

Aus der US-A-5 906 274 ist ein Aufbewahrungsbehälter für scheibenförmige Informationsträger bekannt, der ein Unterteil und ein schwenkbar mit dem Unterteil verbundener Deckel aufweist, wobei das Unterteil aus zwei Teilen besteht, einem außen liegenden Bodenteil und einem innen liegenden Bodenteil. Eine im Querschnitt U-förmige Entriegelungstaste ist mit dem innen liegenden Bodenteil verbunden und hat zwei parallele Schenkel, die durch einen Steg miteinander verbunden sind, der durch Druck mit dem Finger auf den oberen Schenkel elastisch verformbar ist. Im Schließzustand der Taste und bei zugeklapptem Deckel ist die Taste mit dem Deckel derart in Eingriff, dass er in seinem Schließzustand gegen eine Öffnungsbewegung festgehalten wird. Wird der obere Schenkel der Entriegelungstaste durch Fingerdruck genügend weit niedergedrückt, gibt die Taste den Deckel frei. Ein in den Behälter eingelegter Informationsträger kann von der Entriegelungstaste nicht festgehalten werden. Auch im niedergedrückten Zustand der Entriegelungstaste verlaufen der untere Schenkel der Entriegelungstaste sowie der außen liegende Bodenteil des Unterteiles unterhalb des niedergedrückten oberen Schenkels der Taste. Der zweiteilige Aufbau des Unterteils macht den Behälter relativ dick. Auch ist er in der Herstellung aufwendiger als ein Behälter, der nur ein einteiliges Unterteil hat.

Die Aufgabe der Erfindung besteht darin, den gattungsgemäßen Aufbewahrungsbehälter für scheibenförmige Informationsträger so auszubilden, daß bei einfacher Handhabung des Behälters eine sichere Fixierung des Deckels in der Schließstellung und des eingelegten informationsträgers unter Einsatz der Entriegelungstaste sichergestellt ist, wobei die Herstellungskosten gering gehalten werden.

Die Aufgabe der Erfindung wird dadurch gelöst, dass der kurze Schenkel einteilig mit dem Boden verbunden ist und der lange Schenkel im niedergedrückten Zustand der Entriegelungstaste unter die Ebene ragt, ohne am Boden anzuliegen.

Der Vorteil des erfindungsgemäßen Aufbewahrungsbehälters besteht darin, daß der scheibenförmige Informationsträger und der Deckel über die Entriegelungstaste unmittelbar am Unterteil der Deckel über die Entriegelungstaste unmittelbar am Unterteil gehalten werden können, wobei ein in das Unterteil einlegbarer Einsatz mit einer Aufnahmemulde für den scheibenförmigen Informationsträger entbehrlich ist, bei Bedarf aber auch verwendet werden könnte. Wenn der Aufbewahrungsbehälter keinen Einsatz für die Aufnahme des scheibenförmigen Informationsträgers aufweist, wird der scheibenförmige Informationsträger unmittelbar in das Unterteil des Behälters eingelegt. Die Weglassung des Einsatzes von dem Aufbewahrungsbehälter verringert die Herstellungskosten für den Behälter.

Die Entriegelungstaste hat einen relativ kurzen Schenkel und einen mit dem kurzen Schenkel verbundenen relativ langen Schenkel und der kurze Schenkel ist mit dem Boden des Unterteils verbunden. Der kurze Schenkel kann im Schließzustand, der Taste bei geschlossenem Deckel vom Boden in Richtung auf den Deckel wegragen, und der lange Schenkel der Taste kann eine Oberfläche aufweisen, die im Schließzustand der Taste bei geschlossenem Deckel zumindest teilweise im Wesentlichen bündig mit der Oberfläche des Deckels verläuft. Der relativ kurze Schenkel der Taste ist durch einen auf die Oberfläche des langen Schenkels ausgeübten Druck nach außen elastisch biegeverformbar. Hierdurch ergibt sich der Vorteil, daß die Entriegelungstaste stärker als bei den eingangs geschilderten bekannten Aufbewahrungsbehältern, bei denen die Entriegelungstaste an einem im Unterteil des Behälters liegenden Einsatz angeformt ist, niederdrückbar ist, weil das Niederdrücken der Entriegelungstaste nicht wie bei den bekannten Aufbewahrungsbehältern durch Anlage am Boden des Unterteils begrenzt wird. Dadurch, daß die Taste stärker niederdrückbar ist, kann sie beim Niederdrücken weiter von dem scheibenförmigen Informationsträger und/oder dem Deckel entfernt werden, wodurch das Öffnen des Deckels und die Herausnahme des scheibenförmigen Informationsträgers aus dem Behälter erleichtert werden. Die Taste selbst kann in ihrer Steifigkeit verbessert werden, indem auf der Unterseite des langen Schenkels der Taste eine oder mehrere Verstärkungsrippen vorgesehen werden. Da bei dem erfindungsgemäßen Behälter, anders als bei den bekannten Aufbewahrungsbehältern, bei denen die Entriegelungstaste an einem Einsatz angeformt ist, unterhalb des langen Schenkels der Entriegelungstaste kein weiterer Teil des Behälters vorhanden ist, können die Verstärkungsrippen an der Unterseite des langen Schenkels der Entriegelungstaste beim Niederdrücken der Taste auch nirgendwo an dem Behälter zur Anlage kommen und dadurch die Niederdrückbewegung der Taste begrenzen.

Vorzugsweise ist am Boden des Unterteils ein Übergangsabschnitt angeformt, der durch einen Schlitz von der Entriegelungstaste beabstandet ist und eine Oberfläche aufweist, die im wesentlichen bündig mit der Oberfläche des langen Schenkels der Taste im Schließzustand der Taste verläuft. Der Übergangsabschnitt bietet eine Auflagefläche für einen Abschnitt des Daumens des Benutzers des Behälters, während ein anderer Abschnitt dieses Daumens auf der Oberseite des langen Schenkels der Entriegelungstaste aufliegt, um diese bei Bedarf niederzudrücken. Gleichzeitig kann der Benutzer mit dem Zeigefinger und gegebenenfalls dem Mittelfinger den Behälter am Boden des Unterteils abstützen. Auf diese Weise läßt sich durch eine Einhandbedienung der Deckel des Behälters aufklappen und der Behälter stabil mit der Bedienungshand halten. Der Schlitz zwischen der Entriegelungstaste und dem Übergangsabschnitt fördert die Beweglichkeit der Entriegelungstaste.

Das gleichzeitige Öffnen des Deckels und Halten des Behälters mit einer Hand lassen sich noch weiter verbessern, wenn am Boden des Unterteils seitlich neben der Entriegelungstaste jeweils ein Übergangsabschnitt angeformt ist, die beiden Übergangsabschnitte jeweils durch einen Schlitz von der Entriegelungstaste beabstandet sind und die beiden Schlitze parallel zur Längsrichtung der beiden Schenkel der Taste verlaufen. Auf diese Weise wird auf beiden Seiten der Entriegelungstaste je eine Auflagefläche für den Daumen gebildet, mit dem gleichzeitig die Entriegelungstaste niedergedrückt wird.

Als Alternative zu der Anordnung von zwei Übergangsabschnitten seitlich von der Entriegelungstaste kann ein einziger Übergangsabschnitt auf beiden Seiten der Entriegelungstaste und hinter dem freien Ende des langen Schenkels der Entriegelungstaste verlaufen und kann der die Entriegelungstaste von dem Übergangsabschnitt trennende Schlitz zwei zu der Längsrichtung der Schenkel der Taste parallel verlaufende Abschnitte und einen hinter dem freien Ende des langen Schenkels im wesentlich quer zu dessen Längsrichtung verlaufende Abschnitt haben. Auf diese Weise wird eine Auflagefläche für den Daumen nicht nur auf beiden Seiten des langen Schenkels der Taste sondern auch hinter dem freien Ende des langen Schenkels der Taste bereitgestellt.

Vorzugsweise hat der Schlitz zwei parallele Abschnitte, die seitlich neben der Verbindungsstelle zwischen dem kurzen Schenkel der Taste und dem Boden des Unterteils ein Stück weit in den Boden des Unterteils ragen. Durch Vorsehen der beiden Schlitzabschnitte im Boden des Unterteils wird beim Niederdrücken der Entriegelungstaste der zwischen den beiden Schlitzabschnitten liegende Bereich des Bodens ebenfalls gebogen. Dadurch werden Spannungsspitzen an der Verbindungsstelle zwischen dem kurzen Schenkel der Taste und dem Boden des Unterteils beim Niederdrücken der Taste vermindert oder vermieden, weil die Biegung über die Verbindungsstelle hinaus auf eine größere Länge verteilt ist. Je weiter die Schlitzabschnitte in den Boden des Unterteils ragen, desto leichter kann die Entriegelungstaste niedergedrückt werden und desto geringer wird die Biegebeanspruchung an der Verbindungsstelle zwischen dem kurzen Schenkel der Taste und dem Boden des Unterteils.

Vorzugsweise ist die Breite des langen Schenkels der Taste kleiner als die Breite eines auf den langen Schenkel der Taste drückenden Daumens. Damit kann der Daumen gleichzeitig auf den seitlich neben dem langen Schenkel der Taste vorgesehenen Übergangsabschnitt und auf die Oberseite des langen Schenkels der Taste aufgelegt werden und mit Unterstützung der am Boden des Unterteils anliegenden Fingern der Behälter gehalten werden, ohne daß die Taste mit dem Daumen niedergedrückt wird.

Für eine noch leichtere Handhabung des erfindungsgemäßen Aufbewahrungsbehälters kann es von Vorteil sein, wenn die Entriegelungstaste auf ihrer Oberseite mit einer Griffmulde versehen ist.

Weitere Merkmale und Vorteile der Erfindung ergeben sich aus der folgenden Beschreibung verschiedener Ausführungsbeispiele der Erfindung. Es zeigt
- Figur 1: eine Draufsicht auf den Aufbewahrungsbehälter mit aufgeklapptem Deckel, der weggebrochen dargestellt ist, wobei eine CD in das Unterteil des Behälters eingelegt zu sehen ist,
- Figur 2: einen Schnitt entlang der Linie II-II, wobei der Deckel des Aufbewahrungsbehälters jedoch zugeklappt ist und der Schnitt nach links in Figur 2 nur bis zu der Spitze des linken Pfeiles in Figur 1 geführt ist;
- Figur 3: den mit X eingerahmten Ausschnitt in Figur 2, wobei jedoch die Entriegelungstaste im niedergedrückten Zustand gezeigt ist.
- Figur 4: ein weiteres Ausführungsbeispiel der Erfindung in einer ähnlichen Darstellung wie Figur 1;
- Figur 5: ein weiteres Ausführungsbeispiel der Erfindung in einer ähnlichen Darstellung wie Figur 1;
- Figur 6: einen Schnitt entlang der Linie VI-VI in Figur 5, wobei der Deckel in der zugeklappten Stellung und die Entriegelungstaste im Schließzustand gezeigt sind;
- Figur 7: den mit XX eingerahmten Ausschnitt in Figur 6, wobei die Entriegelungstaste im niedergedrückten Zustand dargestellt ist;
- Figur 8: ein weiteres Ausführungsbeispiel der Erfindung in einer ähnlichen Darstellung wie Figur 1.

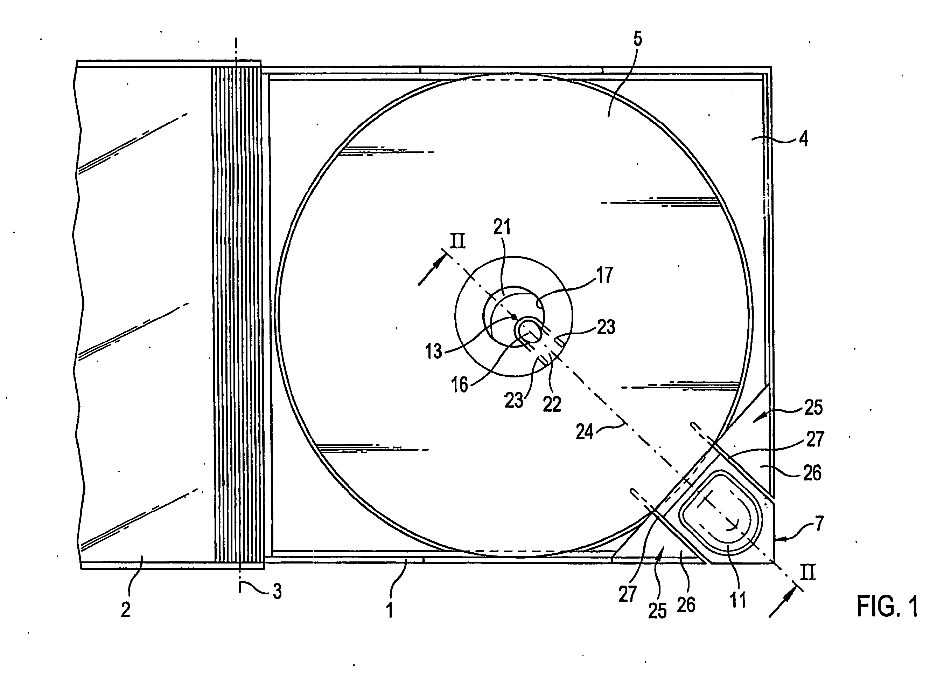

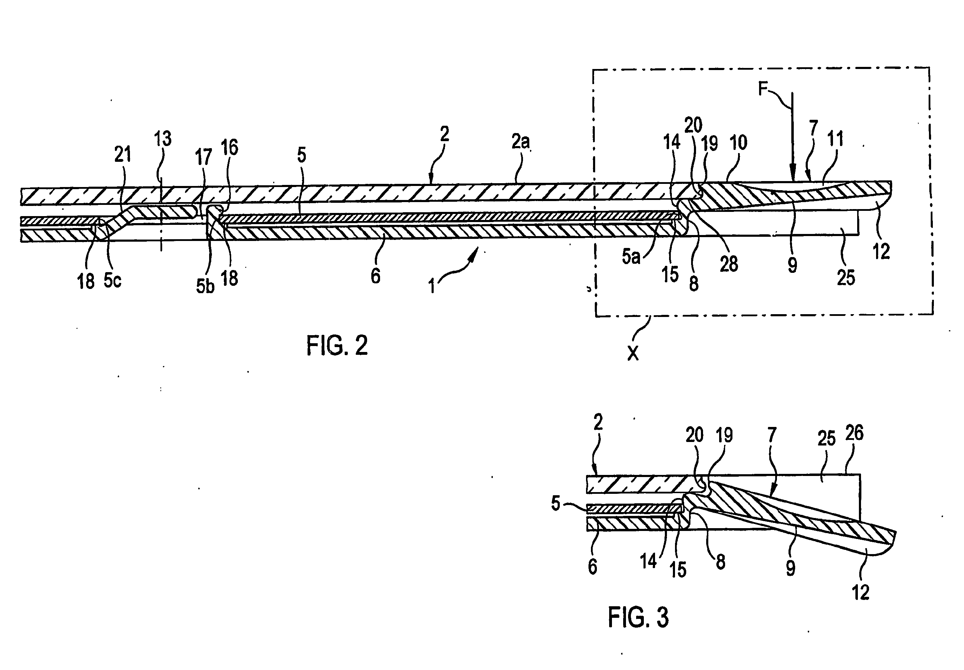

Wie aus den Figuren 1 bis 3 ersichtlich ist, weist ein Aufbewahrungsbehälter für einen scheibenförmigen Informationsträger wie eine CD, ein Unterteil 1 und einen Deckel 2 auf, der schwenkbar mit dem Unterteil 1 verbunden ist. Die Schwenkachse ist mit 3 bezeichnet. Das Unterteil 1 weist eine Aufnahmemulde 4 auf, in die eine CD 5 eingelegt ist. Das Unterteil 1 hat einen Boden 6, an den in einer Ecke des Behälters eine Entriegelungstaste 7 angeformt ist. Wie aus Figur 2 ersichtlich ist, besteht die Entriegelungstaste 7 aus einem kurzen Schenkel 8, der mit dem Boden 6 des Unterteils 1 einteilig verbunden ist, und einem langen Schenkel 9, der mit dem kurzen Schenkel 8 einteilig verbunden ist. In dem in Figur 2 gezeigten Schließzustand der Taste 7 und bei geschlossenem Deckel 2 ragt der kurze Schenkel 8 vom Boden 6 des Unterteils 1 in Richtung auf den Deckel 2 weg. Der lange Schenkel 9 der Taste 7 erstreckt sich im wesentlichen in der gleichen Richtung wie der geschlossene Deckel 2 weg von ihm und hat eine Oberfläche 10, die im Schließzustand der Taste 7 bei geschlossenem Deckel 2 teilweise bündig mit der oberen Oberfläche 2a des Deckels 2 ist. In der Oberfläche 10 des langen Schenkels 9 der Taste 7 befindet sich eine Griffmulde 11, in die beim Betätigen der Taste 7 mit dem Daumen eines Benutzers die ballige Daumeninnenseite gelegt werden kann. Auf der Unterseite des langen Schenkels 9 der Taste 7 befindet sich eine an den Schenkel 9 angeformte Verstärkungsrippe 12, die sich in Längsrichtung des langen Schenkels 9 der Taste 7 erstreckt und zur Versteifung des langen Schenkels 9 der Taste 7 dient, so daß sich beim Niederdrücken der Taste 7 mit dem Daumen des Benutzers der lange Schenkel 9 der Taste nicht wesentlich verformt.

Auf der auf die Mittelachse 13 des Unterteils 1 weisenden Innenseite der Entriegelungstaste 7, und zwar genauer im Bereich des Übergangs zwischen dem kurzen Schenkel 8 und dem langen Schenkel 9 befindet sich ein erster Haltenocken 14, der, wie aus Figur 2 ersichtlich, im Schließzustand der Taste 7 und bei eingelegter CD 5 einen äußeren Randabschnitt 5a der CD 5 von oben übergreift und leicht gegen eine Auflagefläche 15 drückt, die die Oberseite eines an dem Boden 6 angeformten Sockels bildet und gegenüber der inneren Oberfläche des Bodens 6 des Unterteils 1 leicht erhöht ist.

In diametraler Richtung gegenüber des Haltenockens 14 befindet sich ein weiterer, mit dem Boden 6 des Unterteils 1 verbundener Haltenocken 16, der einen Innenrandabschnitt 5b der CD 5, am zentralen Loch 17 der CD 5 übergreift und leicht gegen eine weitere Auflagefläche 18 drückt, die die Oberseite eines weiteren am Boden 6 angeformten Sockels bildet und den gleichen Abstand von der inneren Oberfläche des Bodens 6 des Unterteils 1 wie die Auflagefläche 15 hat. Die Auflagefläche 18 ist kreisringförmig und verläuft koaxial um die Mittelachse 13 des Unterteils 1 herum. Die CD 5 liegt mit ihrem, das zentrale Loch 17 begrenzenden Innenrand auf der dem Boden 6 des Unterteils 1 zugewandten Seite rundherum auf der Auflagefläche 18 auf. Durch Anlage der CD 5 an den Haltenocken 14 und 16 und den Auflageflächen 15 und 18 wird im Schließzustand der Taste 7 die CD 5 in dem Unterteil 1 sicher und zentriert gehalten.

Der Haltenocken 16 kann auch so geformt sein, daß die CD 5 an ihrem Innenrand nicht geklemmt sondern ohne Druck fixiert wird. Ferner ist der Haltenocken 16 elastisch biegeverformbar, so daß er herstellungsbedingte Durchmesserschwankungen der CD 5 durch eine elastische Biegeverformung bei ständiger Anlage an dem Innenrand der CD 5 ausgleichen kann.

Ein weiterer Haltenocken 19 ist oberhalb des Haltenockens 14 und radial von dem Haltenocken 14 nach außen versetzt im Übergangsbereich zwischen dem kurzen Schenkel 8 und dem langen Schenkel 9 der Taste 7 vorgesehen. Im geschlossenen Zustand des Deckels 2 und im Schließzustand der Taste 7 übergreift der Haltenocken 19 einen am Rand des Deckels 2 befindlichen Wulst 20 und drückt den Deckel 2 gegen eine Auflagefläche 28, die an der Oberseite des Haltenockens 14 ausgebildet ist. Wenn der Deckel 2 geschlossen ist und sich die Taste 7 im Schließzustand befindet, wird somit der Deckel 2 sicher an dem Unterteil 1 durch die Klemmwirkung der Taste 7 gehalten.

Durch Niederdrücken der Taste 7 mit dem Daumen des Benutzers, was in Figur 2 durch den Kraftpfeil F symbolisiert ist, werden die Haltenocken 14 und 19 von der CD 5 bzw. dem Deckel 2 nach außen wegbewegt, wodurch die CD 5 und der Deckel 2 aus ihrer Klemmverbindung mit der Entriegelungstaste 7 gelöst und der Deckel 2 nach oben weggeschwenkt und die CD 5 nach dem Öffnen des Deckels 2 nach oben aus dem Unterteil 1 herausgenommen werden können.

Figur 3 zeigt die Entriegelungstaste 7 im niedergedrückten Zustand. Aus Figur 3 ist auch ersichtlich, daß der lange Schenkel 9 der Taste 7 im niedergedrückten Zustand unverformt ist, während der kurze Schenkel 8 nach hinten relativ zu dem Boden 6 des Unterteils 1 gebogen ist. Die Biegeverformung des kurzen Schenkels 8 der Taste 7 ist eine elastische Verformung, die bewirkt, daß sich nach der Entlastung der Taste 7 der kurze Schenkel 8 und der lange Schenkel 9 in ihren, in Figur 2 gezeigten, im wesentlichen unverformten Zustand von selbst zurückbewegen. Ferner ist aus Figur 3 ersichtlich, daß der lange Schenkel 9 der Taste 7 mit seinem von dem kurzen Schenkel 8 entfernten hinteren Ende unter die Ebene, in welcher die untere Oberfläche des Bodens 6 des Unterteils 1 liegt, hinaus niedergedrückt werden kann, ohne daß der lange Schenkel 9 oder die von ihm getragene Verstärkungsrippe 12 an irgend einer anderen Stelle des Behälters anliegen würde und das Niederdrücken der Taste 7 dadurch begrenzt werden würde. Im Vergleich zu dem eingangs geschilderten Stand der Technik werden die Haltenocken 14 und 19 weiter von der CD 5 bzw. dem Deckel 2 wegbewegt, wodurch die CD 5 und der Deckel 2 berührungsfrei an den Haltenocken 14 bzw. 19 vorbeibewegt werden können.

Diametral gegenüber dem Haltenocken 16 befindet sich eine an dem Boden 6 (des Unterteils 1 angeformte Rampe 21, an der die CD 5 mit einem Innenrandabschnitt 5c, der dem von dem Haltenocken 16 übergriffenen Innenrandabschnitt 5b diametral gegenüber liegt, beim Herausnehmen der CD 5 aus dem Unterteil 1 hochgleiten kann, wodurch die Herausnahme der CD 5 aus dem Unterteil 1 erleichtert wird. Umgekehrt wird beim Einlegen der CD 5 in das Unterteil 1 durch das Hinabgleiten dieses Innenrandabschnittes 5c der CD 5 an der Rampe 21 die CD 5 leichter in die gewünschte Position gebracht.

Wie aus Figur 1 ersichtlich, befindet sich der Haltenocken 16 am freien Ende einer am Boden 6 angeformten Zunge 22., die von zwei parallelen Schlitzen 23 begrenzt wird, die im Boden 6 des Unterteils 1 parallel zu einer die Mittelachse 13 schneidenden und durch die Mitte der Taste 7 gehenden gedachten Linie 24 verlaufen. Durch die Anordnung des Haltenockens 16 am freien Ende der von den beiden Schlitzen 23 begrenzten Zunge 22 wird die elastische Biegeverformbarkeit des Haltenockens 16 erhöht, so daß Toleranzen im Durchmesser der CD 5 besser ausgeglichen werden können.

Wie aus Figur 1 weiter ersichtlich ist, befinden sich seitlich neben der Taste 7 zwei in der Draufsicht dreiecksförmige Übergangsabschnitte 25, die jeweils einteilig mit dem Boden 6 des Unterteils 1 verbunden sind. Jeder der Übergangsabschnitte 25 hat eine obere Oberfläche 26, die, wie aus Figur 2 und Figur 3 ersichtlich ist, mit der oberen Oberfläche 10 des langen Schenkels 9 der Taste 7 im Schließzustand der Taste 7 bündig ist. Bei geschlossenem Deckel 2 ist die Oberfläche 26 der Übergangsabschnitte 25 auch bündig mit der oberen Oberfläche 2a des Deckels 2. Die Übergangsabschnitte 25 sind von der Entriegelungstaste 7 durch zwei parallele Schlitze 27 beabstandet, die ein Stück weit in den Boden 6 des Unterteils 1 hineinragen, wie aus Figur 1 ersichtlich ist. Die Schlitze 27 verlaufen parallel zu der durch die Mittelachse 13 und die Mitte der Taste 7 gehenden Linie 24. Die in den Boden 6 des Unterteils 1 hineinlaufenden Abschnitte der Schlitze 27 verbessern die Biegeverformbarkeit des kurzen Schenkels 8 der Taste 7 und vermindern das Risiko des Auftritts von Spannungsspitzen in der Verbindungsstelle zwischen dem kurzen Schenkel 8 der Taste 7 und dem Boden 6 des Unterteils 1. Durch eine größere Länge der in den Boden 6 des Unterteils 1 ragenden Abschnitte der Schlitze 27 läßt sich die Entriegelungstaste 7 leichter niederdrücken, wogegen das Niederdrücken der Entriegelungstaste 7 einen etwas höheren Kraftaufwand erfordert, wenn diese Abschnitte der Schlitze 27 kürzer sind. Die Biegeverformbarkeit des Haltenockens 16 ist ebenfalls durch die Gestaltung der Länge der Schlitze 23 veränderbar.

Die obere Oberfläche 26 der Übergangsabschnitte 25 dient als zusätzliche Auflagefläche für den Daumen, mit dem die Taste 7 niedergedrückt wird. Durch die Verlagerung des Daumendruckes auf die Übergangsabschnitte 25 kann der Behälter gehalten werden, ohne daß die Entriegelungstaste 7 niedergedrückt wird. Wird der Daumendruck hingegen auf die Oberfläche 10 des langen Schenkels 9 der Taste 7 konzentriert, wird die Entriegelungstaste 7 niedergedrückt, wobei durch Auflage des Daumens auf den Übergangsabschnitten 25 ein zusätzlicher Halt des Behälters gegeben ist.

Die Breite des langen Schenkels 9 der Entriegelungstaste 7 ist so gewählt, daß ein "normal breiter" Daumen breiter ist als der lange Schenkel 9 der Taste 7 und infolgedessen auf dem langen Schenkel 9 und zusätzlich seitlich auf einem oder beiden Übergangsabschnitten 25 aufliegen kann. In konkreten Zahlen ausgedrückt, liegt die so gewählte Breite des langen Schenkels 9 der Entriegelungstaste 7 im Bereich von 1 bis 3 cm oder 1,5 bis 2,5 cm. Dadurch, daß die Breite des langen Schenkels 9 kleiner als die Breite eines "normal breiten" Daumens ist, kann das Niederdrücken der Entriegelungstaste 7 begrenzt werden, weil der Daumen durch seine Auflage auf den seitlichen Übergangsabschnitten 25 gehindert wird, sich beim Niederdrücken der Taste 7 vollständig zwischen den beiden Übergangsabschnitten 25 hindurchzubewegen. Auf diese Weise wird die Taste 7 vor übermäßiger Durchbiegung, die zum Bruch führen könnte, geschützt.

Alle Teile des erfindungsgemäßen Aufbewahrungsbehälters bestehen aus Kunststoff, der eine solche Elastizität besitzt, daß die gewünschte elastische Biegeverformung der entsprechenden Teile im Gebrauch.des Behälters wie beschrieben auch auftreten kann.

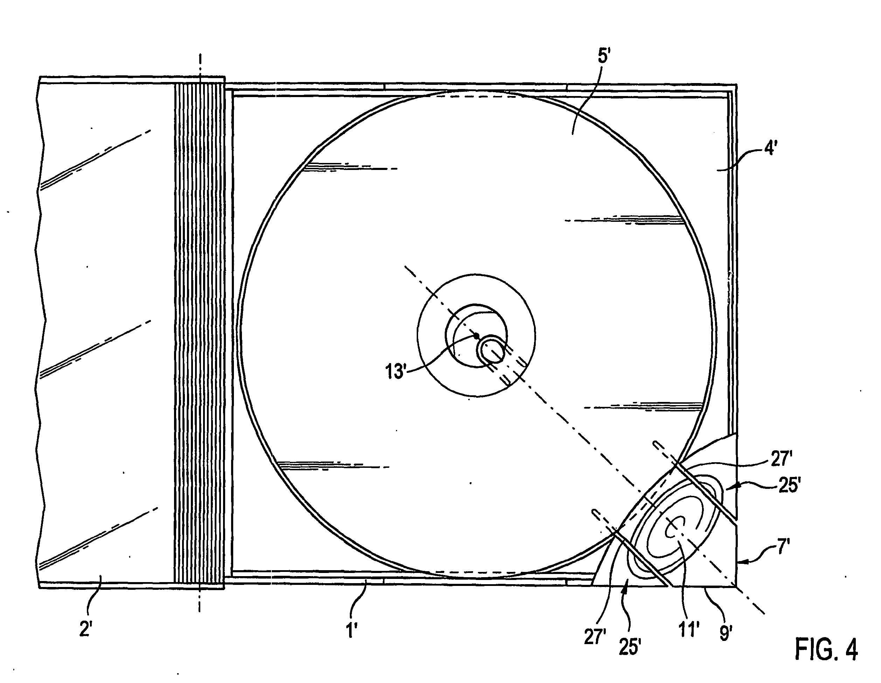

Das in Figur 4 gezeigte Ausführungsbeispiel weicht von dem in den Figuren 1 bis 3 gezeigten Ausführungsbeispiel nur leicht in der Form und Größe der Entriegelungstaste, der Übergangsabschnitte und der Griffmulde ab. Die folgende Beschreibung beschränkt sich daher auf die Abweichungen dieser Teile, die zur Abgrenzung gegenüber den entsprechenden Teilen des ersten Ausführungsbeispiels mit Bezugsziffern mit einem Strich bezeichnet sind, wobei die Bezugsziffern die gleichen sind, die für die entsprechenden Teile des in den Figuren 1 bis 3 dargestellten Ausführungsbeispiels verwendet wurden.

Wie aus Figur 4 ersichtlich ist, reicht die in der Oberfläche des langen Schenkels 9' der Taste 7' gebildete Griffmulde in die seitlichen Übergangsabschnitte 25' hinein, wobei die Griffmulde 11' in der Draufsicht insgesamt oval ist. Die in den Übergangsabschnitten 25' liegenden Abschnitte der Griffmulde 11' sind von dem in der Oberfläche des langen Schenkels 9' befindlichen Abschnitt der Griffmulde 11' durch die parallelen Schlitze 27' getrennt, die zwischen den Übergangsabschnitten 25' und den beiden Schenkeln der Taste 7' verlaufen, und in den Boden des Unterteils 1' ein Stück weit hineinragen. Die auf die Mittelachse 13' weisende Innenseite der Entriegelungstaste 7' hat einen bogenförmigen Verlauf, dessen Krümmung der dem benachbarten oberen Rand der Griffmulde 11' entspricht. Die auf die Aufnahmemulde 4' des Unterteils 1' weisende Innenseite der Übergangsabschnitte 25' hat ebenfalls einen bogenförmigen Verlauf, der eine Fortsetzung des bogenförmigen Verlaufs der Innenseite der Entriegelungs taste 7' ist. Im Schließzustand der Taste 7' sind die längs der Schlitze 27' verlaufenden oberen Ränder des im langen Schenkel 9' angeordneten Abschnittes der Griffmulde 11' gegenüber den entlang der Schlitze 27' verlaufenden oberen Ränder der in den Übergangsabschnitten 25' liegenden Abschnitte der Griffmulde 11' erhöht. Erst durch Niederdrücken der Taste 7' um einen bestimmten Betrag wird diese Höhendifferenz zwischen den längs der Schlitze 27' verlaufenden Ränder der Griffmuldenabschnitte ausgeglichen. Ist diese Höhendifferenz ausgeglichen, fühlt der Benutzer mit dem die Taste 7' niederdrückenden Daumen einen glatten Übergang zwischen den Abschnitten der Griffmulde 11'. Die Form der Griffmulde 11' hat sich dann der Ballenform des Daumens angepaßt. Diese Übereinstimmung der Ballenform des Daumens und der Form der Griffmulde 11' signalisiert dem Benutzer, daß die Taste nicht weiter niedergedrückt werden muß, um den Deckel 2' öffnen und die CD 5' aus dem Unterteil 1' herausnehmen zu können. Das Niederdrücken der Entriegelungstaste 7' wird somit vom Benutzer selbst begrenzt, indem er aufhört, die Taste 7' weiter zu drücken, wenn er merkt, daß der Übergang zwischen den Abschnitten der Griffmulde 11' glatt ist.

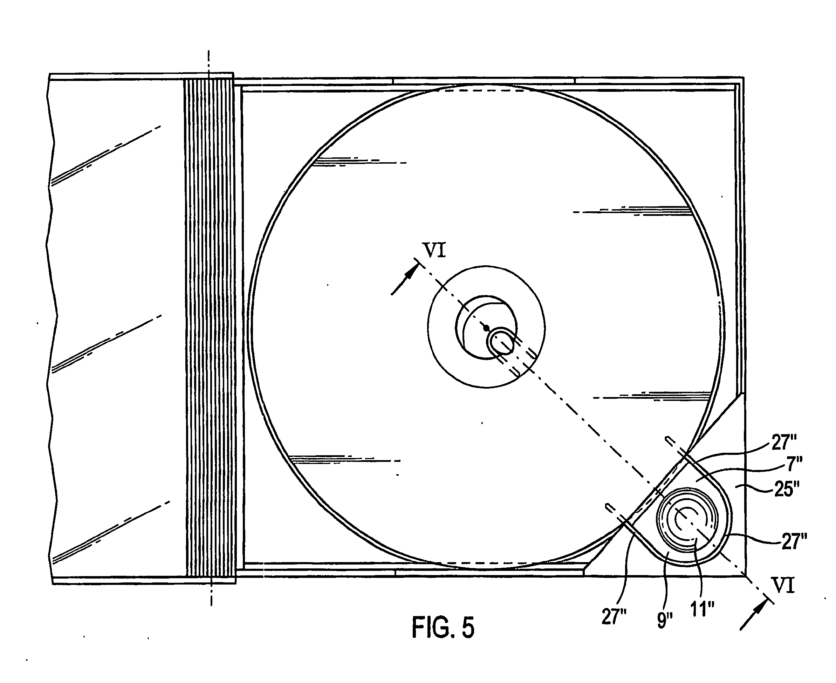

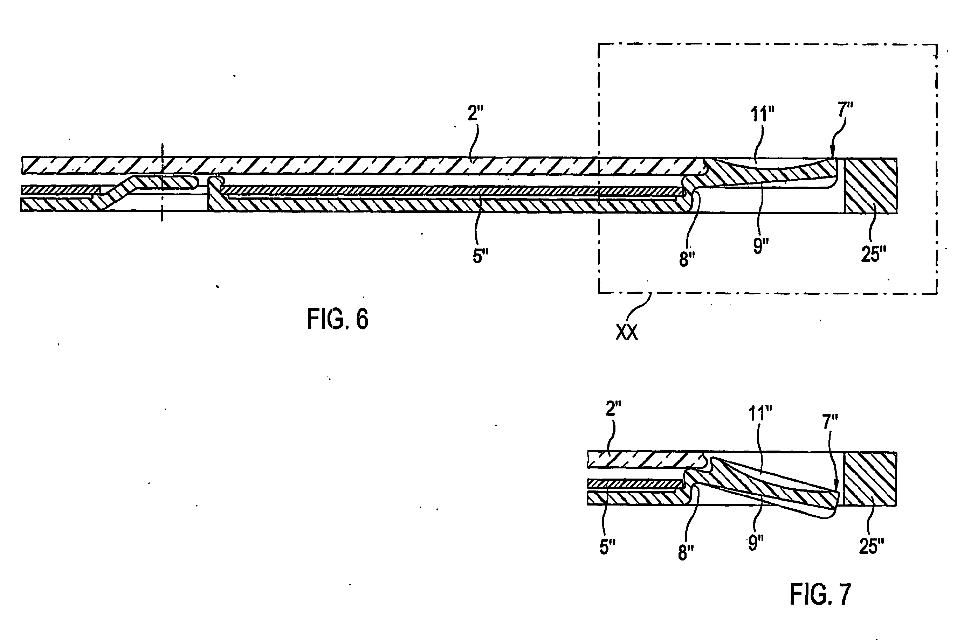

Ein drittes Ausführungsbeispiel der Erfindung ist in den Figuren 5 bis 7 gezeigt. Auch dieses Ausführungsbeispiel unterscheidet sich von dem in den Figuren 1 bis 3 gezeigten Ausführungsbeispiel nur in der Form und Größe der Entriegelungstaste, des Übergangsabschnittes und der Griffmulde. Anstelle von zwei Übergangsabschnitten wie bei dem ersten und zweiten Ausführungsbeispiel ist bei dem dritten Ausführungsbeispiel nur ein einzelner Übergangsabschnitt vorgesehen. Die folgende Beschreibung beschränkt sich daher wieder nur auf eine Erläuterung der Abweichungen, wobei die gleichen Bezugsziffern mit zwei Strichen für die entsprechenden Teile verwendet werden.

Wie aus Figur 5 ersichtlich, ist nur ein einzelner Übergangsabschnitt 25'' vorhanden, der sich seitlich von der Entriegelungstaste 7'' und hinter dem freien Ende des langen Schenkels 9'' der Taste 7'' erstreckt. Die beiden seitlichen Teile des Übergangsabschnittes 25'' sind von der Entriegelungstaste 7'' durch zwei parallele Schlitzabschnitte 27'' getrennt, wogegen der hinter dem freien Ende des langen Schenkels 9'' liegende Teil des Übergangsabschnittes 25'' durch einen im wesentlichen quer zur Längsrichtung des langen Schenkels 9'' verlaufenden weiteren Schlitzabschnitt 27'' getrennt ist. Das hintere freie Ende des langen Schenkels 9'' ist gerundet. Entsprechend gerundet ist der dem freien Ende des langen Schenkels 9'' gegenüberliegende Rand des Übergangsabschnittes 25''. In der Draufsicht, wie sie in Figur 5 zu sehen ist, ergibt sich ein insgesamt U-förmiger Verlauf der Schlitzabschnitte 27''. Die Griffmulde 11'' in der Oberfläche des langen Schenkels 9'' hat einen kreisrunden oberen Rand. Der lange Schenkel 9'' der Taste 7'' ist kürzer als der lange Schenkel 9 oder 9' der Taste 7 bzw. 7' des ersten und zweiten Ausführungsbeispiels. Bei gleichem Durchbiegeweg des langen Schenkels 9'' und des langen Schenkels 9 oder 9' wird ein größerer Abstand zwischen dem kurzen Schenkel 8'' und dem Deckel 2'' bzw. der CD 5'' erreicht als bei dem ersten und dem zweiten Ausführungsbeispiel. Umgekehrt braucht die Taste 7'' nicht so weit durchgedrückt zu werden wie beim ersten und zweiten Ausführungsbeispiel, um den gleichen Abstand wie dort zwischen dem kurzen Schenkel 8'' und dem Deckel 2'' bzw. der CD 5'' zu erreichen.

Durch die Fortsetzung des Übergangsabschnittes 25'' auch hinter dem freien Ende des langen Schenkels 9'' wird die Taste 7'' beim Handhaben des Behälters noch besser vor einem unbeabsichtigten Niederdrücken geschützt, da der Daumen des Benutzers, mit dem er die Taste 7'' niederdrücken will, auch auf dem hinter dem freien Ende des langen Schenkels 9'' liegenden Teiles des Übergangsabschnittes 25'' aufliegen kann. Der Benutzer kann deshalb die Begrenzung der Niederdrückbewegung der Entriegelungstaste 7'' bei dieser Ausführungsform noch besser steuern.

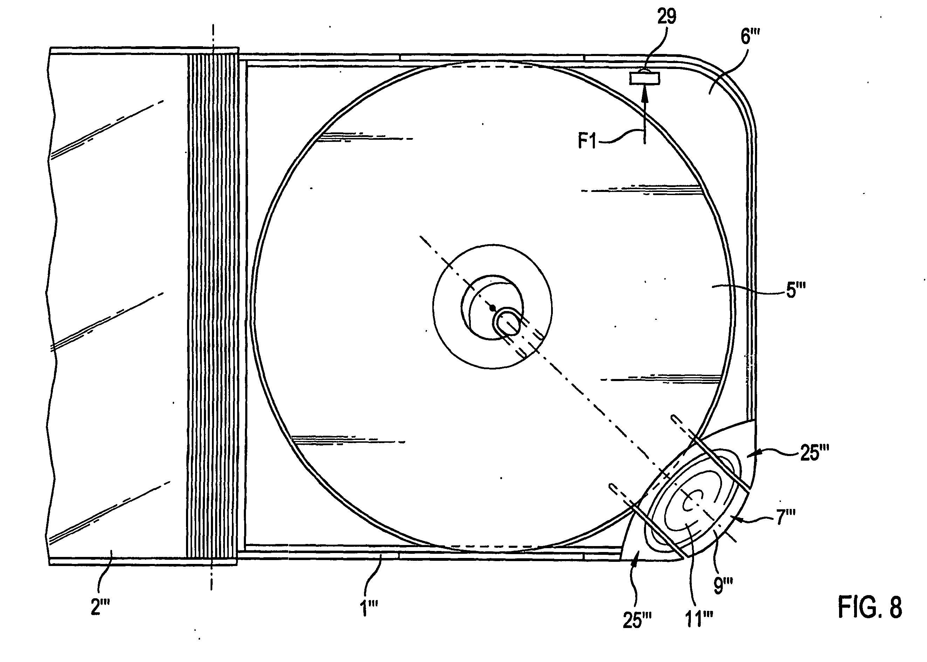

In Figur 8 ist ein weiteres Ausführungsbeispiel dargestellt, das dem in Figur 4 dargestellten Ausführungsbeispiel ähnlich ist. Die verwendeten Bezugsziffern für das in Figur 4 dargestellte Ausführungsbeispiel sind durch drei Striche ergänzt. Die folgende Beschreibung beschränkt sich wieder nur auf die Abweichungen.

Wie in Figur 8 zu sehen ist, ist die Entriegelungstaste 7''' genauso wie die Entriegelungstaste 7' auf ihrer Innenseite gerundet. Entsprechend gerundet ist auch die Innenseite der beiden seitlich von der Entriegelungstaste 7''' angeordneten Übergangsabschnitte 25'''. Die Griffmulde 11''' ist wie die Griffmulde 11' in der Draufsicht oval und entspricht auch sonst in Form und Größe der Griffmulde 11' des in Figur 4 dargestellten Ausführungsbeispiels. Im Unterschied zu dem in. Figur 4 dargestellten Ausführungsbeispiel ist bei dem in Figur 8 dargestellten Ausführungsbeispiel die Außenseite des langen Schenkels 9''' der Taste 7''' gerundet. Die Rundung setzt sich an der Außenseite der beiden Übergangsabschnitte 25''' fort, so daß sich eine insgesamt abgerundete Ecke an dieser Stelle des Behälters ergibt. Entsprechend gerundet ist die gegenüberliegende Ecke des Unterteils 1'''. Ferner fällt der lange Schenkel 9''' ebenso kurz aus wie der lange Schenkel 9'' des vorhergehenden Ausführungsbeispiels, so daß sich auch bei diesem Ausführungsbeispiel der oben genannte Vorteil ergibt, daß entweder bei gleicher Durchbiegung des langen Schenkels 9''' und 9 oder 9' der Abstand zwischen dem kurzen Schenkel und dem Deckel 2''' bzw. der CD 5''' größer ist oder der lange Schenkel 9''' zum Erreichen des gleichen Abstandes nicht so weit niedergedrückt werden muß, wie bei dem ersten und zweiten Ausführungsbeispiel.

Weiterhin hat das in Figur 8 dargestellte Ausführungsbeispiel ein zu der Entriegelungstaste 7''' zusätzliches Halteelement für den Deckel 2''' im geschlossenen Zustand. Dieses Halteelement besteht aus einem an dem Boden 6''' in der Nähe der zu der Entriegelungstaste 7''' gegenüberliegenden gerundeten Ecke des Unterteils 1''' angeformten Nocken 29, der in eine nicht dargestellte Aussparung im Deckel 2''' einrastet, wenn der Deckel geschlossen wird. Beim Schließen des Deckels 2''' wird durch Anlage des Nockens 29 an eine Oberfläche des Deckels 2''' außerhalb der Aussparung der Nocken 29 elastisch verformt, wodurch eine Rückstellkraft F1 erzeugt wird, die den Nocken 29 in die Aussparung drängt, sobald der Nocken 29 und die Aussparung im Deckel 2''' übereinanderliegen. Beim Öffnen des Deckels 2''' wird der Nocken 29 wieder elastisch verformt und springt dann in seine ursprüngliche Form zurück, sobald der Deckel 2''' an dem Nocken 29 vorbeibewegt ist. Als Alternative dazu kann der Nocken auch an dem Deckel 2''' angeformt sein, und befindet sich die Aussparung dann im Unterteil 1'''. Beim Schließen des Deckels rastet dann der Nocken wieder in die Aussparung ein, wodurch der Deckel einen zusätzlichen Halt an dem Unterteil 1''' im geschlossenen Zustand an dieser Stelle bekommt.

Bei beiden Varianten wird das Einrasten des Nockens in die Aussparung bzw. der Halt des Nockens in der Aussparung durch eine parallel zu der Kraft F1 auf den Deckel durch die Klemmung mittels der Taste wirkende Kraft unterstützt, die bestrebt ist, den Deckel unter Ausnutzung des geringen Spiels in den Gelenken zwischen dem Unterteil und des Deckels in der Ebene der Deckel leicht in Richtung des Nockens und der Aussparung zu verschieben. Auf diese Weise wird der Deckel an allen vier Ecken an dem Unterteil gehalten.

Bei einer weiteren Variante ist es möglich, den Nocken und die Aussparung allein unter Ausnutzung der durch die Klemmung des Deckels bewirkten leichten Verschiebung des Deckels miteinander in Eingriff zu bringen und somit den Deckel an vier Ecken am Unterteil festzuhalten.

## Patentansprüche

1. Aufbewahrungsbehälter für scheibenförmige Informationsträger (5, 5', 5'', 5'''), mit einem einen Boden (6, 6''') aufweisenden Unterteil (1, 1', 1''') , einem schwenkbar mit dem Unterteil (1, 1', 1''') verbundenen Deckel (2, 2', 2'', 2''') , der relativ zu dem Unterteil (1, 1', 1''') auf- und zuklappbar ist, und einer einen kurzen Schenkel (8, 8'') und einen langen Schenkel (9, 9', 9'', 9''') aufweisenden Entriegelungstaste (7, 7', 7'', 7'''), die durch Daumendruck auf den langen Schenkel (9, 9', 9'', 9''') von einem Schließzustand, in dem sie den zugeklappten Deckel (2, 2', 2'', 2''') und einen in den Behälter eingelegten Informationsträger (5, 5', 5'', 5''') durch Klemmeingriff mit dem Deckel (2, 2', 2'', 2''') und dem Informationsträger (5, 5', 5'', 5''') am Unterteil (1, 1' , 1''') festhält, in einen niedergedrückten Zustand, in dem sie außer Eingriff mit dem Deckel (2, 2', 2'', 2''') und dem Informationsträger (5, 5' , 5'', 5''') ist, bewegbar ist, wobei der kurze Schenkel (8, 8'') elastisch biegeverformbar ist und der Boden (6, 6''') eine auf der Behälteraußenseite liegende untere Oberfläche hat, die in einer Ebene liegt, die im Schließzustand der Entriegelungstaste (7, 7', 7'') unter dem langen Schenkel (9, 9', 9'', 9''') verläuft, **dadurch gekennzeichnet, dass** der kurze Schenkel (8, 8'') einteilig mit dem Boden (6, 6''') verbunden ist und der lange Schenkel (9, 9', 9'', 9''') im niedergedrückten Zustand der Entriegelungstaste (7, 7', 7'', 7''') unter die Ebene ragt, ohne am Boden (6, 6''') anzuliegen.

2. Aufbewahrungsbehälter nach Anspruch 1, **dadurch gekennzeichnet, dass** der kurze Schenkel (8, 8'') im Schließzustand der Entriegelungstaste (7, 7', 7'', 7''') bei geschlossenem Deckel (2, 2', 2'', 2''') in Richtung auf den Deckel (2, 2', 2'', 2''') vom Boden (6, 6''') weg ragt, und der lange Schenkel (9, 9', 9'', 9''') eine Oberfläche (10) aufweist, die im Schließzustand der Entriegelungstaste (7, 7', 7'', 7''') bei geschlossenem Deckel (2', 2', 2'', 2''') zumindest teilweise im Wesentlichen bündig mit der oberen Oberfläche (2a) des Deckels (2, 2', 2'', 2''') verläuft.

3. Aufbewahrungsbehälter nach Anspruch 2, **dadurch gekennzeichnet, daß** am Boden (6, 6''') ein Übergangsabschnitt (25, 25', 25'', 25''') angeformt ist, der durch einen Schlitz (27, 27', 27'') von der Entriegelungstaste (7, 7', 7'', 7''') beabstandet ist und eine Oberfläche (26) aufweist, die im Wesentlichen bündig mit der Oberfläche (10) des langen Schenkels (9, 9', 9'', 9''') im Schließzustand der Entriegelungstaste (7, 7', 7'', 7''') verläuft.

4. Aufbewahrungsbehälter nach Anspruch 2, **dadurch gekennzeichnet, daß** am Boden (6, 6''') seitlich neben der Entriegelungstaste (7, 7', 7'', 7''') jeweils ein Übergangsabschnitt (25, 25', 25''') angeformt ist, die beiden Übergangsabschnitte (25, 25', 25''') jeweils durch einen Schlitz (27, 27') von der Entriegelungstaste (7, 7', 7''') beabstandet sind und die beiden Schlitze (27, 27') parallel zur Längsrichtung des kurzen bzw. langen Schenkels (8, 9, 9', 9''') verlaufen.

5. Aufbewahrungsbehälter nach Anspruch 3, **dadurch gekennzeichnet, daß** der Übergangsabschnitt (25'') auf beiden Seiten der Entriegelungstaste (7'') und hinter dem freien Ende des langen Schenkels (9'') verläuft, und der Schlitz (27'') zwei zu der Längsrichtung des kurzen bzw. langen Schenkels (8'', 9'') verlaufende Abschnitte und einen hinter dem freien Ende des langen Schenkels (9'') im Wesentlichen quer zu dessen Längsrichtung verlaufenden Abschnitt hat.

6. Aufbewahrungsbehälter nach einem der Ansprüche 3 bis 5, **dadurch gekennzeichnet, daß** der Schlitz (27, 27', 27'') zwei parallele Abschnitte hat, die seitlich neben der Verbindungsstelle zwischen dem kurzen Schenkel (8, 8'') und dem Boden (6, 6''') ein Stück weit in den Boden (6, 6''') ragen.

7. Aufbewahrungsbehälter nach einem der Ansprüche 3 bis 6, **dadurch gekennzeichnet, daß** die Breite des langen Schenkels (9, 9', 9'', 9''') kleiner als die Breite eines auf den langen Schenkel (9, 9', 9'', 9''') drückender Daumen ist.

8. Aufbewahrungsbehälter nach Anspruch 7, **dadurch gekennzeichnet, daß** die Breite des langen Schenkels (9, 9', 9'', 9''') im Bereich von 1 bis 3 cm liegt.

9. Aufbewahrungsbehälter nach Anspruch 8, **dadurch gekennzeichnet, daß** die Breite des langen Schenkels (9, 9', 9'', 9''') im Bereich von 1,5 bis 2,5 cm liegt.

10. Aufbewahrungsbehälter nach einem der vorhergehenden Ansprüche, **dadurch gekennzeichnet, daß** die Entriegelungstaste (7, 7', 7'', 7''') auf ihrer Oberseite eine Griffmulde (11, 11', 11'', 11''') hat.

11. Aufbewahrungsbehälter nach einem der Ansprüche 2 bis 10, **dadurch gekennzeichnet, daß** der lange Schenkel (9, 9', 9'', 9''') auf seiner Unterseite eine oder mehrere Verstärkungsrippen (12) aufweist.

12. Aufbewahrungsbehälter nach einem der vorhergehenden Ansprüche, **dadurch gekennzeichnet, daß** die Entriegelungstaste (7, 7', 7'', 7''')) auf ihrer auf eine Mittelachse (13, 13') des Unterteils (1, 1', 1''') weisenden Innenseite einen Haltenocken (14) aufweist, der im Schließzustand der Entriegelungstaste (7, 7', 7'', 7''') , wenn ein Informationsträger (5, 5', 5'', 5''') in dem Behälter ist, einen äußeren Randabschnitt (5a), des Informationsträgers (5, 5', 5'', 5''')) übergreift und gegen eine Auflagefläche (15) eines am Boden (6, 6''') angeformten Sockels drückt.

13. Aufbewahrungsbehälter nach Anspruch 12, **dadurch gekennzeichnet, daß** die Entriegelungstaste (7, 7', 7'', 7''') auf ihrer Innenseite einen weiteren Haltenocken (19) aufweist, der im Schließzustand der Entriegelungstaste (7, 7', 7'', 7''') und bei geschlossenem Deckel (2, 2', 2'', 2''') einen Randabschnitt (20) des Deckels (2, 2', 2'', 2''') übergreift und gegen eine Auflagefläche (28) an der Innenseite der Entriegelungstaste (7, 7', 7'', 7''') drückt.

14. Aufbewahrungsbehälter nach einem der Ansprüche 2 bis 13, **dadurch gekennzeichnet, daß** in, der Nähe der Mittelachse (13, 13') des Unterteils (1, 1', 1''') ein Haltenocken (16) angeformt ist, der gegenüber der Entriegelungstaste (7, 7', 7'', 7''') liegt und einen Innenrandabschnitt (5b) am zentralen Loch (17) des Informationsträgers (5, 5', 5'', 5''') übergreift und an einer Auflagefläche (18) hält, die sich an einem am Boden (6, 6''') angeformten Sockel befindet.

15. Aufbewahrungsbehälter nach Anspruch 14, **dadurch gekennzeichnet, daß** der Haltenocken (16) am freien Ende einer am Boden (6, 6''') angeformten Zunge (22) angeordnet ist, die von zwei parallelen Schlitzen (23) begrenzt wird, die in Richtung der Entriegelungstaste (7, 7', 7'', 7''') ein Stück weit im Boden (6, 6''') verlaufen.

16. Aufbewahrungsbehälter nach Anspruch 14 oder Anspruch 15, **dadurch gekennzeichnet, daß** diametral gegenüber zu dem Haltenocken (16) eine Rampe (21) vorgesehen ist, auf der ein Innenrandabschnitt (5c) des Informationsträgers (5, 5', 5'', 5''') beim Einlegen in den Behälter oder Herausnehmen aus dem Behälter entlanggleiten kann.

17. Aufbewahrungsbehälter nach Anspruch 16, **dadurch gekennzeichnet, daß** die Auflagefläche (18) kreisringförmig ist und am unteren Ende der Rampe (21) verläuft.

18. Aufbewahrungsbehälter nach einem der vorhergehenden Ansprüche, **dadurch gekennzeichnet, daß** am Deckel (2, 2', 2'', 2''') ein Nocken vorgesehen ist, der beim Schließen des Deckels (2, 2', 2'', 2''') in eine Aussparung im Unterteil (1, 1', 1''') federnd einrastet.

19. Aufbewahrungsbehälter nach einem der Ansprüche 1 bis 17, **dadurch gekennzeichnet, daß** am Unterteil (1, 1', 1''') ein Nocken (29) vorgesehen ist, der beim Schließen des Deckels (2, 2', 2'', 2''') in eine Aussparung im Deckel (2, 2', 2'', 2''') federnd einrastet.

## Claims

1. Storage container for disc-shaped information carners (5, 5', 5'', 5'''), with a lower portion (1, 1', 1''') comprising a base (6, 6'''), a lid (2, 2', 2'', 2''') attached and able to swivel on the said lower portion (1, 1', 1'''), which can be tilted up and down relative to the lower portion (1, 1', 1'''), and a release key (7, 7', 7'', 7''') comprising a short arm (8, 8'') and a long arm (9, 9', 9'', 9'''), which can be moved by thumb pressure on the said long arm (9, 9', 9'', 9''') from a closing condition in which it securely holds the closed lid (2, 2', 2'', 2''') and an information carrier (5, 5', 5'', 5''') placed in the container by clamping engagement with the said cover (2, 2', 2'', 2''') and the said information carrier (5, 5', 5'', 5''') onto the lower portion (1, 1', 1'''), to a depressed position in which it is disengaged from the lid (2, 2', 2'', 2''') and the information carrier (5, 5', 5'', 5'''), such that the said short arm (8, 8'') can be deformed by elastic bending and the base (6, 6''') has a lower surface on the outside of the container, which lies in a plane that extends under the long arm (9, 9', 9'', 9''') of the release key (7, 7', 7'', 7''') in the closing condition, **characterised in that** the short arm (8, 8'') is connected integrally with the base (6, 6''') and, when the release key (7, 7', 7'', 7''') is depressed, the long arm (9, 9', 9'', 9''') is below the said plane, without being in contact with the base (6, 6''').

2. Storage container according to Claim 1, **characterised in that** in the closing condition of the release key (7, 7', 7'''', 7''') and when the lid (2, 2', 2'', 2''') is closed, the short arm (8, 8'') projects away from the base (6, 6''') in the direction towards the lid (2, 2', 2'', 2'''), and the long arm (9, 9', 9'', 9''') has a surface (10) which, in the closing condition of the release key (7, 7', 7'', 7''') and when the lid (2, 2', 2'', 2''') is closed, extends at least in part essentially flush with the upper surface (2a) of the lid (2, 2', 2'', 2''').

3. Storage container according to Claim 2, **characterised in that** a transition section (25, 25', 25'', 25''') is formed on the base (6, 6'''), which is separated from the release key (7, 7', 7'', 7''') by a slot (27, 27', 27'') and which has a surface (26) that is essentially flush with the surface (10) of the long arm (9, 9', 9'', 9''') when the release key (7, 7', 7'', 7''') is in the closing position.

4. Storage container according to Claim 2, **characterised in that** on each side of the release key (7, 7', 7'', 7''') respective transition sections (25, 25', 25''') are formed on the base (6, 6'''), the two transition sections (25, 25',25''') each being separated from the release key (7, 7', 7''') by a slot (27, 27') and the two slots (27, 27') running parallel to the longitudinal direction of the short and long arms (8, 9, 9', 9''').

5. Storage container according to Claim 3, **characterised in that** the transition section (25'') extends on both sides of the release key (7'') and behind the free end of the long arm (9''), and the slot (27'') has two sections extending in the longitudinal direction of the short and long arms (8'', 9'') and a section extending behind the free end of the long arm (9'') essentially transversely to its longitudinal direction.

6. Storage container according to any of Claims 3 to 5, **characterised in that** the slot (27,27', 27'') has two parallel sections which extend alongside the connection points between the short arm (8, 8'') and the base (6, 6'') a short distance into the base (6, 6''').

7. Storage container according to any of Claims 3 to 6, **characterised in that** the width of the long arm (9, 9', 9'', 9''') is smaller than the width of a thumb pressing on the long arm (9, 9', 9'', 9''').

8. Storage container according to Claim 7, **characterised in that** the width of the long arm (9, 9', 9'', 9''') is in the range from 1 to 3 cm.

9. Storage container according to Claim 8, **characterised in that** the width of the long arm (9, 9', 9'', 9''') is in the range from 1.5 to 2.5 cm.

10. Storage container according to any of the preceding claims, **characterised in that** on its upper side the release key (7, 7', 7'', 7''') has a gripping recess (11, 11', 11'', 11''').

11. Storage container according to any of Claims 2 to 10, **characterised in that** the long arm (9, 9', 9'', 9''') has one or more reinforcing ribs on its underside.

12. Storage container according to any of the preceding claims, **characterised in that** on its inner side facing towards a central axis (13, 13') of the lower part (1, 1', 1''') the release key (7, 7', 7'', 7''') has a holding cam (14) which, in the closing condition of the release key (7, 7', 7'', 7''') and when an information carrier (5, 5', 5'', 5''') is in the container, overlaps an outer rim section (5a) of the information carrier (5, 5', 5'', 5''') and presses it against a contact area (15) of a support surface formed on the base (6, 6'').

13. Storage container according to Claim 12, **characterised in that** on its inner side, the release key (7, 7', 7'', 7''') has another holding cam (18) which, in the closing condition of the release key (7, 7', 7'', 7''') and when the lid (2, 2', 2'', 2''') is closed, overlaps an edge section (20) of the lid (2, 2', 2'', 2''') and presses it against a contact area (28) on the inside of the release key (7, 7', 7'', 7''').

14. Storage container according to any of Claims 2 to 13, **characterised in that** close to the central axis (13, 13') of the lower part (1, 1', 1''') a holding cam (16) is formed, which is opposite the release key (7, 7', 7'', 7''') and overlaps an inner edge section (5b) of the central hole (17) of the information carrier (5, 5', 5'', 5''') and holds it on a contact area (18) located on a support surface formed on the base (6, 6''').

15. Storage container according to Claim 14, **characterised in that** the holding cam (16) is arranged at the free end of a tab (22) formed on the base (6, 6'''), which is delimited by two parallel slots (23) that extend a short way in the base (6, 6''') in the direction of the release key (7, 7', 7'', 7''').

16. Storage container according to Claims 14 or 15, **characterised in that** diametrically opposite the holding cam (16) a ramp (21) is provided, along which an inside edge section (5c) of the information carrier (5, 5', 5'', 5''') can slide when the latter is being inserted into or extracted from the container.

17. Storage container according to Claim 16, **characterised in that** the contact area (18) is circular and extends at the lower end of the ramp (21).

18. Storage container according to any of the preceding claims, **characterised in that** a cam is provided on the lid (2, 2', 2'', 2'''), which clips elastically into a recess in the lower portion (1,1', 1''') when the lid (2, 2', 2'', 2''') is closed.

19. Storage container according to any of Claims 1 to 17, **characterised in that** a cam (29) is provided on the lower portion (1, 1', 1'''), which clips elastically into a recess in the lid (2, 2', 2'', 2''') when the lid (2, 2', 2'', 2''') is closed.

## Revendications

1. Conteneur de stockage pour des supports d'informations en forme de disque (5, 5', 5'' , 5'''), comprenant une partie inférieure (1, 1', 1''') présentant un fond (6, 6''') , un couvercle (2, 2', 2'', 2''') relié de manière pivotante à la partie inférieure (1, 1', 1''') , qui peut être relevable et rabattable par rapport à la partie inférieure (1, 1', 1'''), et un bouton de déverrouillage (7, 7', 7'', 7''') présentant un côté court (8, 8'') et un côté long (9, 9', 9'', 9''') qui peut passer, par l'intermédiaire d'une pression du pouce sur le côté long (9, 9', 9'' , 9'''), d'un état fermé, dans lequel il maintient le couvercle rabattu (2, 2', 2'' , 2''') et un support d'informations (5, 5', 5'', 5''') introduit dans le conteneur par l'intermédiaire d'un engagement par serrage avec le couvercle (2, 2', 2'', 2''') et le support d'informations (5, 5', 5'', 5''' ) sur la partie inférieure (1, 1', 1'''), à un état enfoncé, dans lequel il se trouve désengagé du couvercle (2, 2', 2'', 2''') et du support d'informations (5, 5' , 5'', 5''') , le côté court (8, 8'') pouvant subir une déformation élastique par flexion, et le fond (6, 6''') possédant une surface inférieure située sur la face externe du conteneur, qui se trouve sur un plan se prolongeant, à l'état fermé du bouton de déverrouillage (7, 7', 7'''), sous le côté long (9, 9', 9'' , 9''') , **caractérisé en ce que** le côté court (8, 8'') est relié au fond (6, 6''') de façon à créer un seul bloc et **en ce que** le côté long (9, 9', 9'' , 9''') se prolonge sous le plan, dans l'état enfoncé du bouton de déverrouillage (7, 7', 7'', 7'''), sans être adjacent au fond (6,6''') .

2. Conteneur de stockage selon la revendication 1, **caractérisé en ce que** le côté court (8, 8''), dans l'état fermé du bouton de déverrouillage (7, 7', 7'', 7'''), lorsque le couvercle est fermé (2, 2', 2'', 2'''), s'élève en s'éloignant du fond (6, 6'''), en direction du couvercle (2, 2', 2'', 2'''), et **en ce que** le côté long (9, 9', 9'', 9''') présente une surface (10) qui, dans l'état fermé du bouton de déverrouillage (7, 7', 7'', 7'''), lorsque le couvercle est fermé (2, 2', 2'', 2'''), se prolonge au moins en partie sensiblement à fleur de la surface supérieure (2a) du couvercle (2, 2', 2'', 2''').

3. Conteneur de stockage selon la revendication 2, **caractérisé en ce qu'**une partie de transition (25, 25', 25'', 25''') est formée dans le fond (6, 6'''), qui est espacée du bouton de déverrouillage (7, 7', 7'' , 7''') par une fente (27, 27', 27'') et présente une surface (26) qui se prolonge sensiblement à fleur de la surface (10) du côté long (9, 9', 9'', 9''' ) dans l'état fermé du bouton de déverrouillage (7, 7', 7'' , 7''') .

4. Conteneur de stockage selon la revendication 2, **caractérisé en ce qu'**une partie de transition (25, 25', 25''' ) est respectivement formée dans le fond (6, 6''') , latéralement à côté du bouton de déverrouillage (7, 7', 7'' , 7'''), les deux parties de transition (25, 25', 25''') étant respectivement espacées du bouton de déverrouillage (7, 7', 7''') par une fente (27, 27'), et les deux fentes (27, 27') se prolongeant parallèlement au sens de la longueur du côté court ou, selon le cas, du côté long (8, 9, 9', 9''') .

5. Conteneur de stockage selon la revendication 3, **caractérisé en ce que** la partie de transition (25'') se prolonge des deux côtés du bouton de déverrouillage (7'') et derrière l'extrémité libre du côté long (9''), et **en ce que** la fente (27'') possède deux parties se prolongeant dans le sens de la longueur du côté court ou, selon le cas, du côté long (8'', 9'') et une partie se prolongeant derrière l'extrémité libre du côté long (9''), sensiblement de manière transversale par rapport à son sens de la longueur.

6. Conteneur de stockage selon l'une des revendications 3 à 5, **caractérisé en ce que** la fente (27, 27', 27'') possède deux parties parallèles qui se prolongent latéralement dans le fond (6, 6'''), un peu plus loin que le point de jonction entre le côté court (8, 8'') et le fond (6, 6''') .

7. Conteneur de stockage selon l'une des revendications 3 à 6, **caractérisé en ce que** la largeur du côté long (9, 9', 9'', 9''') est inférieure à la largeur d'un pouce appuyant sur le côté long (9, 9', 9'', 9''' ) .

8. Conteneur de stockage selon la revendication 7, **caractérisé en ce que** la largeur du côté long (9, 9', 9'', 9''') va de 1 à 3 cm.

9. Conteneur de stockage selon la revendication 8, **caractérisé en ce que** la largeur du côté long (9, 9', 9'', 9''') va de 1,5 à 2,5 cm.

10. Conteneur de stockage selon l'une des revendications précédentes, **caractérisé en ce que** le bouton de déverrouillage (7, 7', 7'', 7''') possède une empreinte concave (11, 11', 11'', 11''' ) .

11. Conteneur de stockage selon l'une des revendications 2 à 10, **caractérisé en ce que** le côté long (9, 9', 9'' , 9''') présente une ou plusieurs nervures de renfort (12) sur sa face inférieure.

12. Conteneur de stockage selon l'une des revendications précédentes, **caractérisé en ce que** le bouton de déverrouillage (7, 7', 7'', 7''') présente un ergot de maintien (14) sur sa face interne dirigée vers un axe médian (13, 13') de la partie inférieure (1, 1', 1''') qui, dans l'état fermé du bouton de déverrouillage (7, 7', 7'', 7''' ) , recouvre une partie de bord externe (5a) du support d'informations ( 5, 5' , 5'', 5''' ) lorsqu'un support d'informations (5, 5', 5'', 5''') est présent dans le conteneur, et appuie contre une surface portante (15) d'un socle formé dans le fond (6, 6''' ) .

13. Conteneur de stockage selon la revendication 12, **caractérisé en ce que** le bouton de déverrouillage (7, 7', 7'', 7''') présente un autre ergot de maintien (19) sur sa face interne, qui recouvre, dans l'état fermé du bouton de déverrouillage (7, 7', 7'', 7''') et lorsque le couvercle est fermé (2, 2', 2'' , 2'''), une partie de bord (20) du couvercle (2, 2', 2'' , 2''' ) et qui appuie contre une surface portante (28) sur la face interne du bouton de déverrouillage (7, 7', 7'', 7''').

14. Conteneur de stockage selon l'une des revendications 2 à 13, **caractérisé en ce qu'**un ergot de maintien (16) est formé à proximité de l'axe médian (13, 13') de la partie inférieure (1, 1', 1'''), qui se trouve en face du bouton de déverrouillage (7, 7', 7'', 7''') et qui recouvre une partie de bord interne (5b) au niveau du trou central (17) du support d'informations (5, 5', 5'' , 5''') et qui repose sur une surface portante (18) qui se trouve sur un socle formé dans le fond (6, 6''').

15. Conteneur de stockage selon la revendication 14, **caractérisé en ce que** l'ergot de maintien (16) est agencé au niveau de l'extrémité libre d'une languette (22) formée dans le fond (6, 6'''), qui est délimitée par deux fentes parallèles (23) se prolongeant, un peu plus loin dans le fond (6, 6'''), en direction du bouton de déverrouillage (7, 7', 7'', 7''').

16. Conteneur de stockage selon la revendication 14 ou la revendication 15, **caractérisé en ce qu'**une rampe (21) est prévue, diamétralement opposé à l'ergot de maintien (16), le long de laquelle une partie de bord interne (5c) du support d'informations (5, 5', 5'', 5''') peut être dirigée lorsque celui-ci est introduit dans le conteneur ou extrait du conteneur.

17. Conteneur de stockage selon la revendication 16, **caractérisé en ce que** la surface portante (18) a une forme annulaire et se prolonge au niveau de l'extrémité inférieure de la rampe (21).

18. Conteneur de stockage selon l'une des revendications précédentes, **caractérisé en ce qu'**un ergot est prévu au niveau du couvercle (2, 2', 2'', 2''') , qui s'enclenche de façon élastique, lors de la fermeture du couvercle (2, 2', 2'' , 2'''), dans un évidement pratiqué dans la partie inférieure (1, 1', 1''').

19. Conteneur de stockage selon l'une des revendications 1 à 17, **caractérisé en ce qu'**un ergot (29) est prévu au niveau de la partie inférieure (1, 1' , 1'''), qui s'enclenche de façon élastique, lors de la fermeture du couvercle (2, 2', 2'', 2'''), dans un évidement pratiqué dans le couvercle (2, 2', 2'', 2''').
